Europäisches Patentamt

(19) **European Patent Office**

**Office européen des brevets**

(11) Numéro de publication: **0018879**
**B1**

(12) **FASCICULE DE BREVET EUROPEEN**

(45) Date de publication du fascicule du brevet:
04.04.84

(21) Numéro de dépôt: **80400502.3**

(22) Date de dépôt: **15.04.80**

(51) Int. Cl.³: **H 04 Q 11/04, H 04 Q 3/68**

(54) **Réseau de connexion temporel modulaire.**

(30) Priorité: **27.04.79 FR 7910805**

(43) Date de publication de la demande:
**12.11.80 Bulletin 80/23**

(45) Mention de la délivrance du brevet:
**04.04.84 Bulletin 84/14**

(84) Etats contractants désignés:
**BE DE GB IT SE**

(56) Documents cités:
**EP - A - 0 003 448**
**EP - A - 0 006 214**
**EP - A - 0 018 865**
**DE - B - 2 454 090**
**FR - A - 2 327 696**
**FR - A - 2 386 225**
**FR - A - 2 408 963**
**US - A - 4 021 619**

**NTC 77 CONFERENCE RECORD, vol. 3, décembre 1977 New York US C.G. SVALA: "DSS-1, A digital local switching system with remote line switches", pages 39:5-1 à 39:5-7**
**COMMUTATION & TRANSMISSION, vol. 1, no. 1, septembre 1979, Paris FR PERROT: "La Gamme de commutation numérique temporelle MT de**

(73) Titulaire: **THOMSON-CSF TELEPHONE, 146, Boulevard de Valmy, F-92707 Colombes (FR)**

(72) Inventeur: **Athenes, Claude, "THOMSON-CSF" - SCPI 173 boulevard Haussmann, F-75360 Paris Cedex 08 (FR)**
Inventeur: **Meresse, Jean Louis Joseph, "THOMSON-CSF" - SCPI 173 boulevard Haussmann, F-75360 Paris Cedex 08 (FR)**
Inventeur: **Salle, Jacques Edmond, "THOMSON-CSF" - SCPI 173 boulevard Haussmann, F-75360 Paris Cedex 08 (FR)**

(74) Mandataire: **Thrierr, Françoise et al, THOMSON-CSF SCPI 173, Bld Haussmann, F-75379 Paris Cedex 08 (FR)**

(56) Documents cités: (suite)
**Thomson-CSF", pages 103-112**
**IEEE INTERNATIONAL SWITCHING SYMPOSIUM RECORD, juin 1972 Cambridge US K.E. WUHRMANN: "System IFS-1, The Network Configuration", pages 65-72**

## Réseau de connexion temporel modulaire

La présente invention se rapporte à un réseau de connexion modulaire pour centraux téléphoniques temporels, utilisant la technique de modulation par impulsions et codage. L'invention se rapporte plus particulièrement aux centraux ou autocommutateurs de petite capacité mettant en oeuvre des dispositifs concentrateurs-déconcentrateurs.

Les réseaux de connexion classiques sont constitués d'assemblages complexes de circuits appelés commutateurs temporels et commutateurs spatiaux qui présentent une part importante du volume des centraux qui les comportent. De plus, ces assemblages complexes sont mal adaptés à la réalisation de centraux de petite capacité aisément extensibles.

On connaît de tels réseaux de connexion par exemple d'après les documents FR-A-2 386 225 et DE-B-2 454 090. Ces réseaux de connexion connus comportent deux étages de circuits de connexion en cascade. Chaque circuit d'un étage est relié à tous les circuits de l'autre étage, tandis qu'à l'intérieur d'un même étage, les circuits ne sont pas reliés entre eux.

La taille des réseaux de connexion peut être diminuée en utilisant les techniques de concentration qui partent de la constatation que tous les abonnés n'utilisent pas leurs lignes simultanément et qui permettent de raccorder à un central un nombre d'abonnés plus grand que le nombre total d'entrées du réseau de connexion de ce central.

Les techniques de concentration sont mises en oeuvre à l'aide de dispositifs concentrateurs-déconcentrateurs, l'un d'eux, faisant l'objet de la demande de brevet européen EP-0 018 865 publiée le 12. 11. 1980, est réalisé à l'aide matrices de commutation temporelles dites matrices temporelles symétriques MTS. Ce dispositif concentrateur-déconcentrateur comporte une partie centralisée comportant des modules centraux qui sont composés à l'aide de matrices temporelles symétriques et qui assurent la mise en liaison des abonnés avec un autocommutateur pour assurer leur mise en communication avec les abonnés ne dépendant terminale d'abonnés et de circuits.

Afin de remédier aux inconvénients mentionnés plus haut, la présente invention propose un réseau de connexion temporel modulaire pour central téléphonique de petite capacité qui soit extensible, et qui évite l'emploi d'un réseau de connexion centralisé classique.

Selon une caractéristique de l'invention, ce réseau de connexion est réalisé par raccordement direct d'unités terminales d'abonnés et de circuits par l'intermédiaire de jonctions numériques MIC desservant deux à deux ces unités terminales entre elles.

On rappelle que la technique MIC consiste à échantillonner les signaux vocaux au rythme de 8 kHz puis à quantifier et à coder ces échantillons sous forme de signaux numériques dans lesquels chaque échantillon est représenté par un mot de huit éléments binaires.

Le multiplexage par répartition temporelle permet de transmettre par l'intermédiaire d'une seule jonction numérique MIC des signaux émanant d'abonnés distincts, un tel multiplexage permettant classiquement d'obtenir 24 ou 30 voies téléphoniques par jonction (normes CCITT).

Dans la suite de ce brevet, dans un but de simplification, il ne sera plus question que d'unités terminales mais, à chaque fois, il faudra comprendre »unités terminales d'abonnés et de circuits«.

D'autres caractéristiques et avantages ressortiront mieux de la description qui va suivre, faite en regard des dessins annexés, sur lesquels:

— la figure 1 représente schématiquement un module central d'un concentrateur-déconcentrateur tel que défini ci-dessus;

— les figure 2A et 2B représentent deux modes de répartition de jonctions issues de modules centraux situés dans la même unité terminale;

— la figure 3 représente sous forme de tableau un mode de raccordement de 2 à 7 unités terminales;

— la figure 4 représente un mode de répartition de jonctions issues de modules centraux situés dans la même unité terminale dans le cas d'unités terminales à très fort trafic;

— la figure 5 représente un mode de répartition de jonctions issues de modules centraux situés dans une même unité terminale, ceci pas du dispositif concentrateur-déconcentrateur.

Ce dispositif concentrateur-déconcentrateur comporte à la fois une partie de concentration centralisée et une partie de concentration décentralisée pour assurer les communications dans les deux sens, ces parties sont situées dans des modules terminaux qui comportent les équipements des abonnés et des circuits annexes et qui constituent ce qui est classiquement appelé une unité dans une variante de raccordement de 1 à 10 unités terminales;

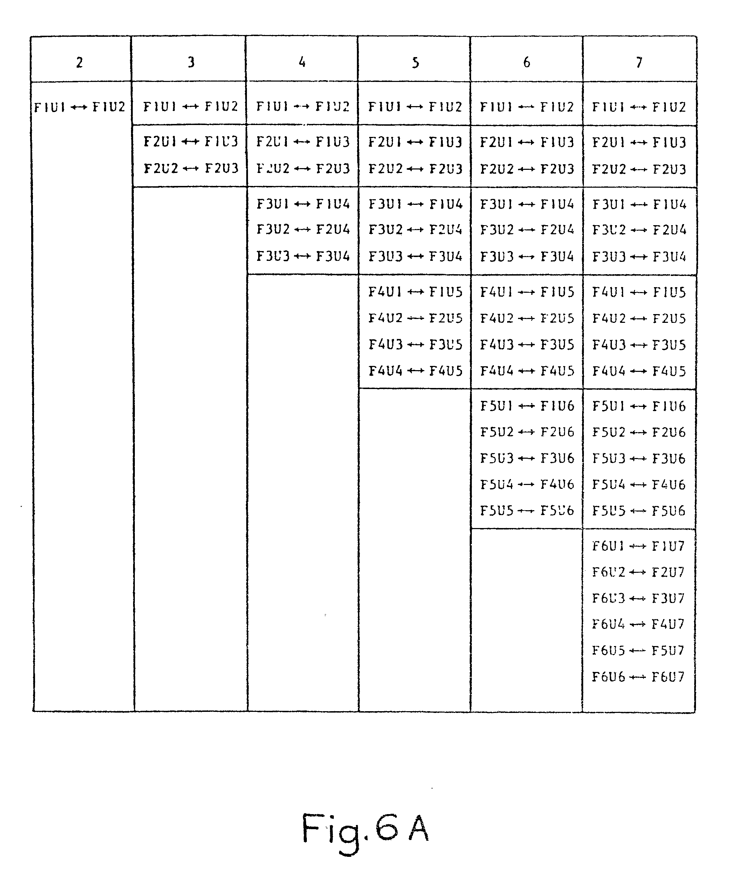

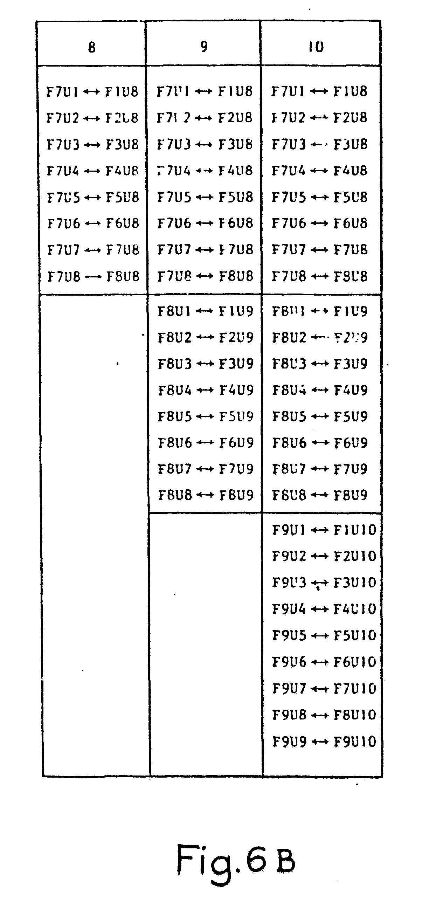

— les figures 6A et 6B représentent sous forme de tableaux un mode de raccordement de 2 à 10 unités terminales;

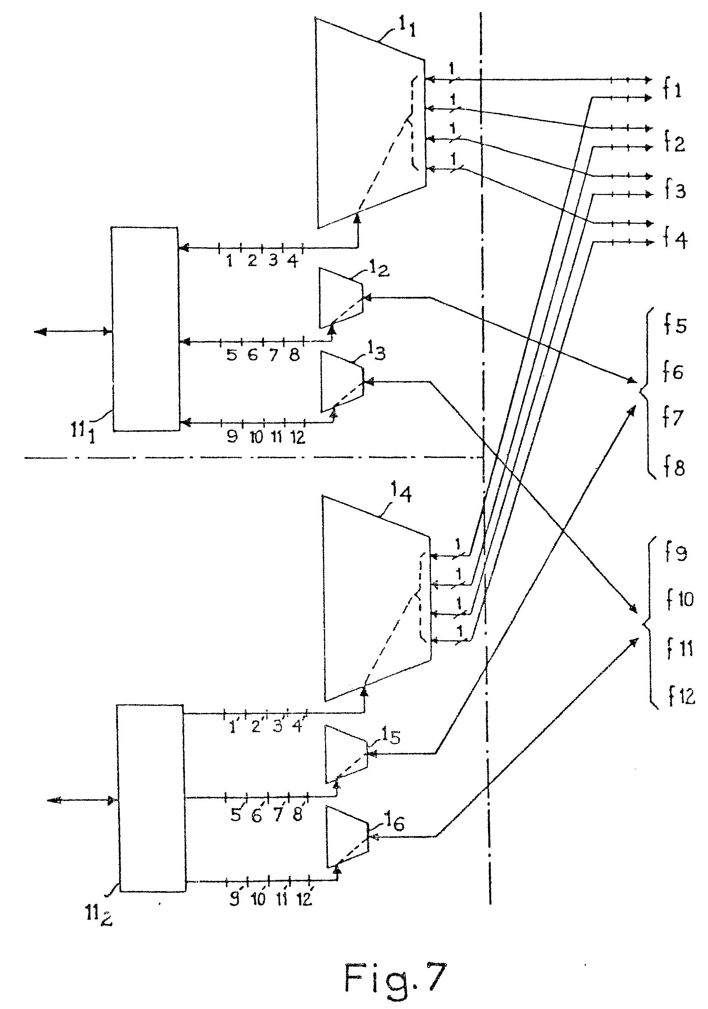

— la figure 7 représente le raccordement du contrôleur de signalisation au réseau.

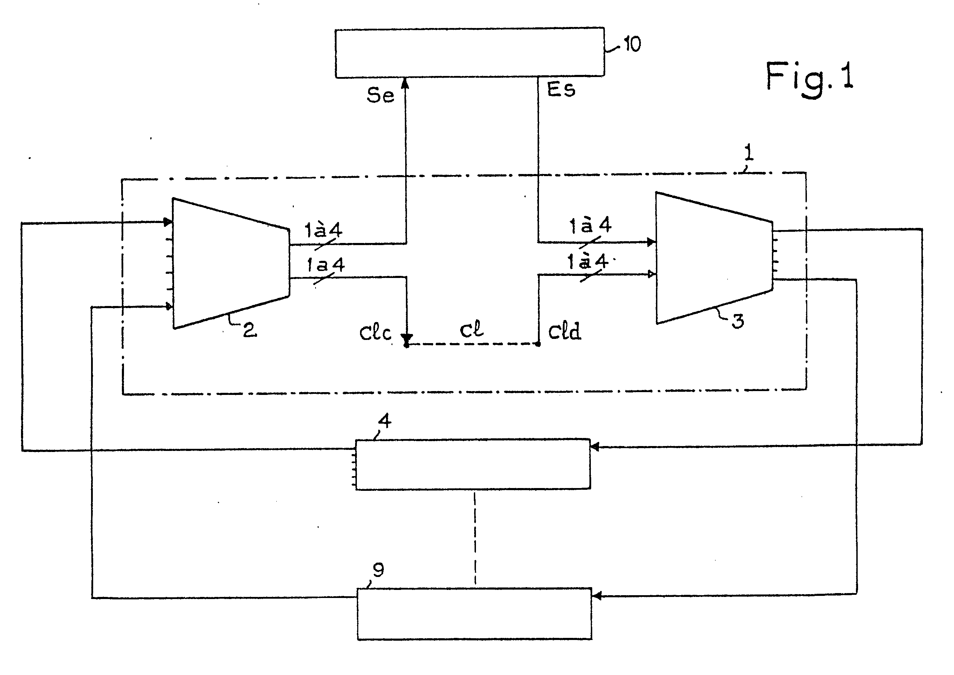

Le module central 1 de la figure 1 comporte une partie 2 relative à la concentration et une partie 3 relative à la déconcentration. Les entrées de la partie 2 sont constituées de jonctions MIC en provenance d'autant de modules terminaux référencés 4 à 9, dans un exemple de réalisation ce nombre de jonctions est de six.

De même les sorties de la partie 3 sont constituées d'autant de jonctions MIC de retour vers les modules terminaux 4 à 9.

Des jonctions MIC Se, sortant de la partie 2, et des jonctions MIC Es, au maximum, entrant dans la partie 3, sont destinées aux liaisons avec un autocommutateur 10, soit aux liaisons entre les unités terminales dans le cas d'un central de petite capacité, dans un exemple de réalisation les nombres respectifs de jonctions Se et Es sont égaux et variant de 1 à 4.

De plus, des jonctions Clc en sortie de la partie 2 et des jonctions Cld en entrée de la partie 3 sont disponibles pour réaliser des connexions locales C1 entre les parties 2 et 3, leur nombre est égal à celui des jonctions Es et Se dans un exemple de réalisation.

Une unité terminale d'abonnés et de circuits comporte des modules centraux, répartis en deux groupes, dans un exemple de réalisation chaque unité comporte six modules centraux.

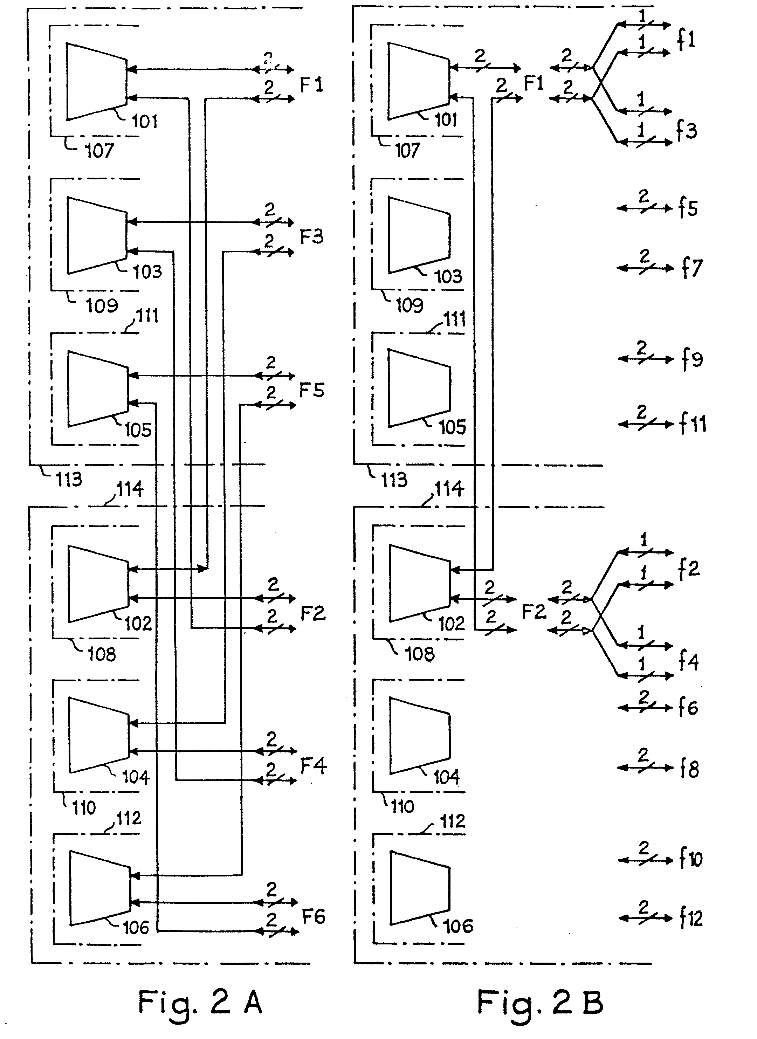

Les figures 2A et 2B représentent les parties relatives à la concentration et à la déconcentration 101 à 106 de six modules centraux 107 à 112 répartis en deux groupes de modules centraux 113 et 114. Sur la figure 2A, six faisceaux F1 à F6 constitués par les jonctions MIC Se et Es représentées sur la figure 1 sont reliés auxdits modules centraux 107 à 112 de façon à que chaque faisceau, tel que le faisceau F1, soit relié à deux modules centraux, tels que les modules centraux 107 et 108, non situés dans le même groupe de modules centraux. Dans l'exemple choisi, le module central 107 est situé dans le groupe 113 et le module central 108 est situé dans le groupe 114. Ceci, impliquant que le nombre de modules centraux équipés soit un nombre pair, est réalisé pour des raisons de sécurité. Ainsi, en cas de panne totale d'un groupe de modules centraux, le trafic peut au moins partiellement être écoulé par l'intermédiaire de l'autre groupe de modules centraux.

La figure 2B montre que les faisceaux F1 à F6 qui comportent quatre jonctions chacun dans l'exemple choisi peuvent être dédoublés pour constituer des faisceaux de 2 jonctions f1 à f12. Ainsi, parmi les 4 jonctions constituant le faisceau F1, les 2 jonctions reliées au module central 107 ainsi que les 2 jonctions reliées au module central 108 se partagent pour des raisons de sécurité entre les faisceaux F1 et F3 de manière à constituer 2 faisceaux de 2 jonctions f1 à f3.

La description du réseau de connexion temporel modulaire, réalisé par raccordement d'unités terminales est faite en référence aux figures 1, 2 et 3.

Trois configurations de base pour le raccordement d'unités terminales sont proposées selon le nombre d'unités terminales à raccorder et suivant le trafic à écouler, ainsi qu'une variante permettant l'interconnexion de 1 à 10 unités terminales. Le raccordement entre elles de n unités terminales nécessite l'utilisation de $(n-1)$ faisceaux par unité terminale, un faisceau de 4 jonctions pouvant écouler un trafic de 90 Erlangs et un faisceau de 2 jonctions 40 Erlangs, ces nombres étant approximatifs. Par exemple, dans le cas de 6 modules centraux, les faisceaux F1 à F6 représentés sur la figure 2A permettent le raccordement entre elles de 7 unités terminales.

D'une manière générale, la loi d'interconnexion d'unités terminales peut être la suivante: le faisceau Fi de l'unité terminale Uj $(j \geqslant i)$ est relié au faisceau Fj de l'unité terminale Ui + 1.

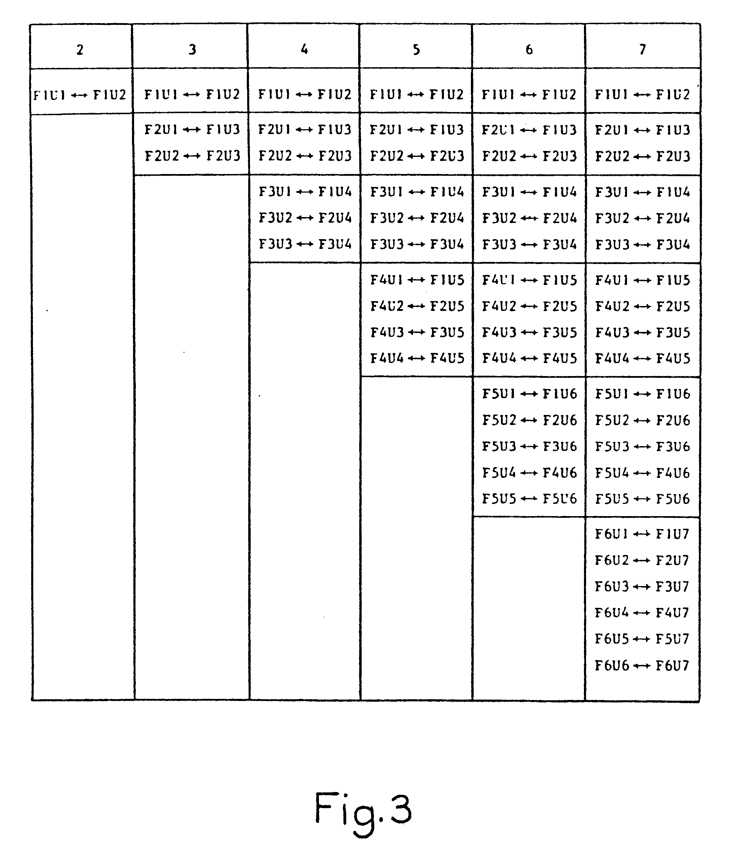

La première configuration se rapporte au raccordement, illustré par le tableau de la figure 3, d'unités terminales U1 à U7. Sur ce tableau, le chiffre inscrit en haut de chaque colonne, représente le nombre d'unités terminales devant être raccordées entre elles. Une seule unité terminale U1, équipée de 2 modules centraux, donc comprenant 2 faisceaux de 4 jonctions locales chacun, peut écouler un trafic de 180 Erlangs. Deux unités terminales, U1 et U2, sont raccordées au moyen d'un seul faisceau F1, ce qui est exprimé dans le tableau de la figure 3 par F1U↔F1U2. Dans ce cas, si on considère que le trafic local dans chaque unité terminale U1 ou U2 est égal au trafic vers l'autre unité, chaque unité terminale U1 ou U2 peut écouler un trafic total de 180 Erlangs. Le tableau de la figure 3 présente les connexions pouvant être réalisées entre faisceaux issus des unités terminales U1 à U7 à raccorder selon la loi d'interconnexion énoncée précédemment.

Le tableau ci-dessous présente en seconde ligne le nombre m1 de modules centraux par unité terminale et en troisième ligne le nombre p1 total de câbles à 8 paires reliant entre elles les unités terminales, à utiliser en fonction du nombre n1 de ces unités figurant en première ligne.

Tableau 1

| n 1 | 2 | 3 | 4 | 5 | 6 | 7 |
|-----|---|---|---|---|---|----|
| m 1 | 2 | 2 | 4 | 4 | 6 | 6 |
| p 1 | 1 | 3 | 6 | 10 | 15 | 21 |

Ainsi, d'une part, le raccordement de n1 $(2 \leqslant n1 \leqslant 7)$ unités terminales nécessite l'utilisation de $(n1-1)$ faisceaux de 4 jonctions par unité terminale, donc de m1 modules centraux par unité terminale, m1 étant un nombre pair égal ou immédiatement supérieur à $(n1-1)$. D'autre part le nombre total de câbles à 8 paires, c'est-à-dire le nombre total de faisceaux à 4 jonctions reliant les unités terminales entre elles est égal au nombre de combinaisons de 2 unités terminales choisies parmi n1 unités:

$$p\,1 = C_{n\,1}^2.$$

En supposant que chaque unité terminale écoule la même quantité de trafic, soit T cette valeur commune de trafic. Du fait qu'en plus des (n1 − 1) faisceaux de 4 jonctions par unité terminale il existe un faisceau de jonctions de connexion locale, chaque faisceau Fi (1 ⩽ i ⩽ 6) écoule un trafic égal à $\frac{T}{n\,1}$, en supposant que chaque faisceau Fi ainsi que le faisceau de jonctions de connexion locale écoulent la même quantité de trafic.

La deuxième configuration concerne le raccordement de 5 à 13 unités terminales d'abonnés et de circuits. D'après ce qui précède, lorsque le nombre n de baies augmente, le trafic $\frac{T}{n\,1}$ écoulé par chaque faisceau Fi diminue. Pour n = 5 et T = 180 Erlangs, ce trafic par faisceau Fi a pour valeur 36 Erlangs. Dans ce cas, deux jonctions par faisceau suffisent.

Pour un trafic T donné, égal par exemple à 180 Erlangs, on peut donc utiliser, à partir d'un certain nombre de baies, 5 dans l'exemple choisi, les faisceaux représentés sur la figure 2B pour interconnecter jusqu'à 13 unités terminales. La loi d'interconnexion de ces unités est la même que celle décrite précédemment.

Le tableau ci-dessous présente en seconde ligne le nombre m2 de modules centraux par unité terminale et, en troisième ligne, le nombre p2 total de câbles à 4 paires reliant entre elles les unités terminales, en fonction du nombre n2 (5 ⩽ n2 ⩽ 13), figurant en première ligne, d'unités terminales.

Tableau 2

| n 2 | 5 | 6 | 7 | 8 | 9 | 10 | 11 | 12 | 13 |
|---|---|---|---|---|---|---|---|---|---|
| m 2 | 2 | 4 | 4 | 4 | 4 | 6 | 6 | 6 | 6 |
| p 2 | 10 | 15 | 21 | 28 | 36 | 45 | 55 | 66 | 78 |

Ainsi, d'une part, le raccordement de n2 (5 ⩽ n2 ⩽ 13) unités terminales nécessite l'utilisation de m2 modules centraux par unité terminale, m2 étant égal à 2 × PE $\left( \frac{n2+2}{4} \right)$, PE désignant la partie entière de l'expression. D'autre part, le nombre total de câbles à 4 paires, c'est-à-dire le nombre total de faisceaux à 2 jonctions reliant les unités terminales entre elles est, comme pour la première configuration, donné par la formule

$$p\,2 = C_{n\,2}^2.$$

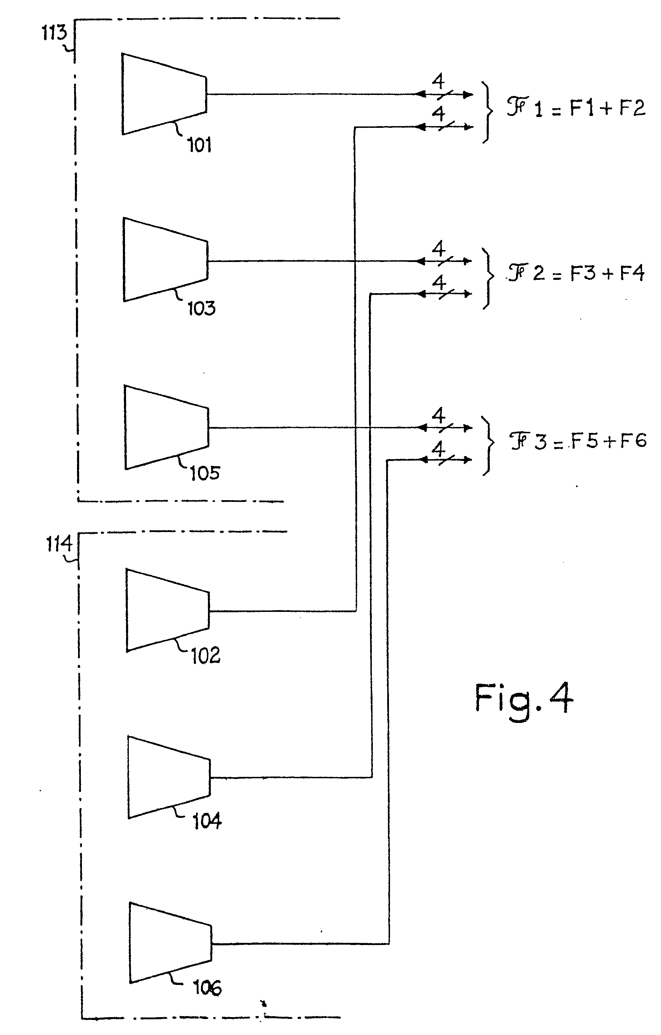

Une troisième configuration traite le cas d'unités terminales à très trafic. Pour une unité terminale il suffit de rajouter des modules centraux. Mais dans le cas de plusieurs unités terminales, les faisceaux Fi de 4 jonctions utilisés dans la première configuration sont insuffisants. Ainsi, pour deux unités terminales, comme il a été vu précédemment, le trafic total écoulé par chaque unité terminale est au maximum de 180 Erlangs. Les faisceaux Fi de la première configuration peuvent alors être groupés deux par deux pour créer 3 faisceaux $\mathfrak{F}1$ à $\mathfrak{F}3$ de 8 jonctions MIC et écoulant chacun 190 Erlangs. La figure 4 reprend le schéma de la figure 2A en regroupant les 6 faisceaux Fl à F6 en 3 faisceaux $\mathfrak{F}1$ à $\mathfrak{F}3$. Les 3 faisceaux $\mathfrak{F}1$ à $\mathfrak{F}3$ permettent de raccorder jusqu'à 4 unités terminales à très fort trafic suivant la loi d'interconnexion énoncée précédemment. Le tableau ci-après présente en seconde ligne le nombre m3 de modules centraux par unité terminale et en troisième ligne le nombre p3 de câbles à 16 paires entre elles les unités terminales ces modules et ces câbles devant être utilisés en fonction du nombre n3 (1 ⩽ n3 ⩽ 4) d'unités terminales, figurant en première ligne.

Tableau 3

| n 3 | 1 | 2 | 3 | 4 |
|---|---|---|---|---|
| m 3 | 4 | 2 | 4 | 6 |
| p 3 | 0 | 1 | 3 | 6 |

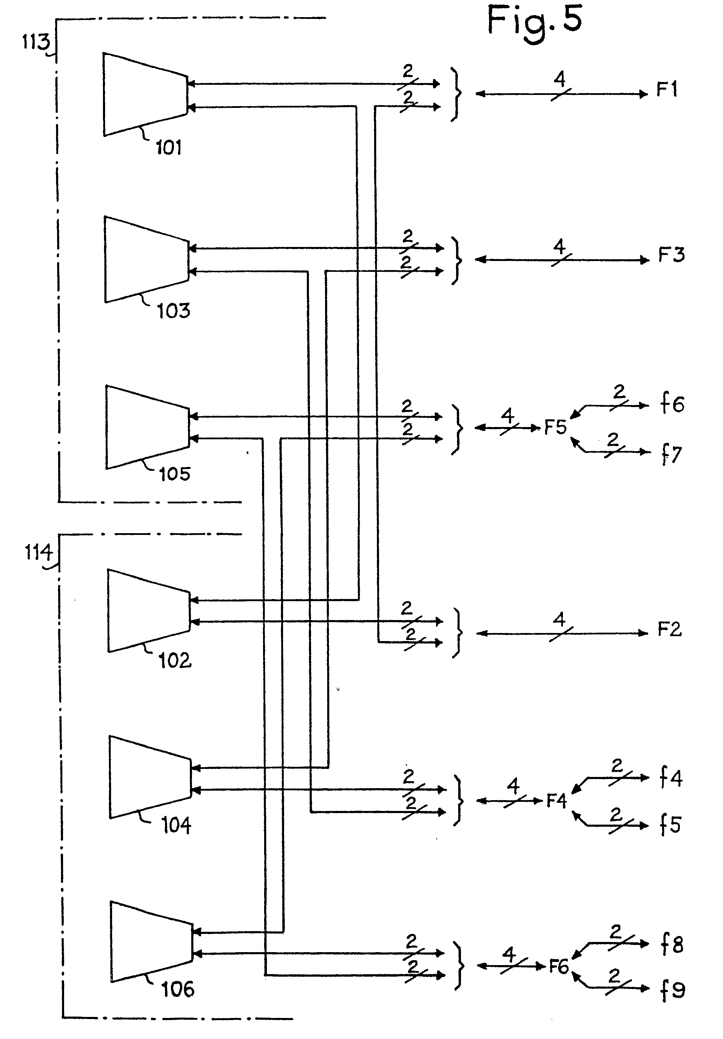

Une variante de raccordement pour 1 à 10 unités terminales U1 à U10 peut être déduite des première et deuxième configurations décrites ci-dessus. Il a été constaté qu'à partir de 5 unités, ceci pour une valeur moyenne de trafic écoulé par chaque unité de 180 Erlangs, les interconnexions peuvent être réalisées par des faisceaux de 2 jonctions. Les 24 jonctions MIC issues des 6 modules centraux, au maximum, inclus dans une unité terminale peuvent être groupées, pour une partie d'entre elles, en 3 faisceaux de 4 jonctions chacun et pour l'autre partie, en 6 faisceaux de 2 jonctions MIC chacun. Ainsi la figure 5 reprend le schéma de la figure 2A: les faisceaux F1, F2, F3 de 4 jonctions chacun subsistent alors que les faisceaux F4 à F6 sont subdivisés en 6 faisceaux de 2 jonctions chacun, f4 à f9, de telle manière que F4=f4+f5, F5=f6+f7, F6=f8+f9. Les 9 faisceaux F1 à F3 et f4 à f9 permettent d'interconnecter jusqu'à 10 unités terminales, les 4 premières étant reliées entre elles par les faisceaux F1 à F3 de 4 jonctions.

Le tableau de la figure 6A présente les connexions réalisées entre faisceaux dans le cas du raccordement de 2 à 7 unités terminales U1 à U7. Le tableau de la figure 6B présente les connexions supplémentaires réalisées entre faisceaux dans le cas du raccordement de 8 à 10 unités U1 à U10. Sur chacun de ces tableaux, le chiffre inscrit en haut de chaque colonne représente le nombre d'unités terminales devant être raccordées entre elles selon la loi générale d'interconnexion énoncée plus haut.

Les extensions de 1 à 10 unités terminales se font par adjonctions de câbles (à 8 paires ou à 4 paires) et de modules centraux du dispositif concentrateur-déconcentrateur. Le tableau ci-après présente, en seconde ligne, le nombre m4 de modules centraux par unité terminale et, en troisième et quatrième lignes, les nombres p41 et p42 respectivement de câbles à 8 paires et à 4 paires reliant entre elles les unités terminales U1 à U10. Ces nombres m4, p41, p42 sont fonction du nombre n4 d'unités terminales figurant en première ligne du tableau.

Tableau 4

| n 4 | 1 | 2 | 3 | 4 | 5 | 6 | 7 | 8 | 9 | 10 |
|-----|---|---|---|---|---|---|---|---|---|----|
| m 4 | 2 | 2 | 4 | 4 | 4 | 4 | 6 | 6 | 6 | 6 |
| p 41 | 0 | 1 | 3 | 6 | 6 | 6 | 6 | 6 | 6 | 6 |
| p 42 | 0 | 0 | 0 | 0 | 4 | 9 | 15 | 22 | 30 | 39 |

Le raccordement d'unités terminales par un réseau de connexion sans partie centralisée nécessite la transmission de messages entre unités terminales par signalisation sur voie commune (figure 7). Ainsi, dans chaque faisceau reliant entre elles deux unités terminales, une voie aller et une voie retour sont réservées sur une jonction MIC reliée au module central correspondant au faisceau. Par sécurité cette voie de signalisation est dupliquée sur une autre jonction MIC du faisceau. Dans chacun des deux groupes de modules centraux contenus dans une unité terminale, un contrôleur de signalisation 11 contrôle la signalisation portée par les voies de signalisation des faisceaux correspondant aux modules centraux du groupe. Pour chaque faisceau, un des deux contrôleurs, de signalisation contrôle l'une des deux voies, l'autre contrôleur de signalisation contrôle l'autre voie.

Il est entendu que les configuration proposées et la variante de raccordement n'ont été décrites et représentées qu'à titre d'exemples préférentiels. La taille des faisceaux de jonctions MIC en provenance et en direction des modules centraux dépend du nombre d'unités terminales à raccorder et du trafic écoulé par ces unités terminales. Chaque cas de raccordement d'unités terminales aboutit à un réseau de connexion spécifique construit au moyen de la présente invention dont le cadre est défini par les revendications annexées.

## Revendications

1. Réseau de connexion modulaire pour central téléphonique de type temporel, destiné à interconnecter des unités terminales d'abonnés et de circuits, chaque unité terminale d'abonnés et de circuits comportant au moins un module central (1) comprenant lui-même des parties relatives à la concentration (2) et à la déconcentration, et plusieurs modules terminaux (4 à 9), ainsi qu'un certain nombre de jonctions MIC (Se, Es), chaque jonction MIC constituant une entrée et une sortie d'un module central (1) contenu dans l'unité terminale d'abonnés et de circuits, caractérisé en ce que les unités terminales d'abonnés et de circuits sont interconnectées directement deux à deux par lesdites jonctions MIC.

2. Réseau de connexion modulaire selon la revendication 1, caractérisé en ce que l'ensemble des jonctions MIC reliant entre elles deux unités terminales d'abonnés et de circuits déterminées sont groupées en un faisceau dont la taille dépend du trafic à écouler entre ces deux unités terminales d'abonnés et de circuits.

3. Réseau de connexion modulaire selon l'une quelconque des revendications 1 ou 2, caractérisé en

**0 018 879**

ce que, pour des raisons de sécurité, les modules centraux (107 à 112) situés dans une même unité terminale d'abonnés et de circuits, sont répartis en deux groupes (113 et 114) de modules centraux, fonctionnant de façon autonome l'un par rapport à l'autre, et que chaque faisceau (F1 à F6) issu de chaque unité terminale d'abonnés et de circuits est constitué de jonctions MIC dont une partie est reliée à un ou plusieurs modules centraux appartenant à un groupe de modules centraux (113) et dont l'autre partie est reliée à un ou plusieurs modules centraux appartenant à l'autre groupe de modules centraux (114).

4. Réseau de connexion modulaire selon l'une quelconque des revendications 1 à 3, caractérisé en ce que les échanges de signalisation entre deux unités terminales d'abonnés et de circuits sont effectués sur une voie aller et une voie retour d'au moins une jonctions MIC reliant ces deux baies (figure 7).

5. Réseau de connexion modulaire selon la revendication 4, caractérisé en ce que pour des raisons de sécurité une voie aller et une voie retour sont réservées pour la signalisation sur deux jonctions MIC du faisceau, l'une des deux jonctions MIC étant reliée à un module central appartenant à l'un des deux groupes de modules centraux, et l'autre jonction MIC étant reliée à un module central appartenant à l'autre groupe de modules centraux (figure 7).

6. Réseau de connexion modulaire selon la revendication 5, caractérisé en ce que chaque unité terminale d'abonnés et de circuits comporte en outre deux dispositifs de contrôle de signalisation (11$_1$, 11$_2$) affectés chacun à un groupe de modules centraux différents, chaque dispositif de contrôle de signalisation permettant de contrôler la signalisation, échangée entre ladite unité terminale d'abonnés et de circuits et les autres unités, portée par les différentes jonctions MIC reliées aux différents modules centraux appartenant au groupe de modules centraux auquel est affecté ledit dispositif de contrôle de signalisation.

**Patentansprüche**

1. Modulförmiges Vermittlungsnetzwerk für eine Telefonzentrale vom Zeittyp, zur Verbindung der Teilnehmer- und Verbindungs-Endgeräteeinheiten untereinander, wobei jede Teilnehmer- und Verbindungs-Endgeräteeinheit, wenigstens einen zentralen Modul (1), der seinerseits Teile enthält, welche die Konzentration (2) und die Dekonzentration betreffen, und mehrere Endmoduln (4 bis 9) sowie eine bestimmte Anzahl von Verbindungsleitungen MIC (Se, Es) umfaßt, wobei jede Verbindungsleitung MIC einen Eingang und einen Ausgang eines Zentralmoduls (1) bildet, der in der Teilnehmer- und Verbindungs-Endgeräteeinheit enthalten ist, dadurch gekennzeichnet, daß die Teilnehmer- und Verbindungs-Endgeräteeinheiten durch die genannten Verbindungsleitungen MIC direkt zwei zu zwei untereinander verbunden sind.

2. Modulförmiges Vermittlungsnetzwerk nach Anspruch 1, dadurch gekennzeichnet, daß die Gesamtheit der Verbindungsleitungen MIC, welche zwei bestimmte Teilnehmer- und Verbindungs-Endgeräteeinheiten miteinander verbinden, in einem Bündel gruppiert sind, dessen Größe von dem zwischen den beiden Teilnehmer- und Verbindungs-Endgeräteeinheiten abzuwickelnden Verkehr abhängt.

3. Modulförmiges Vermittlungsnetzwerk nach Anspruch 1 oder 2, dadurch gekennzeichnet, daß aus Sicherheitsgründen die Zentralmoduln (107 bis 112), die sich in derselben Teilnehmer- und Verbindungs-Endgeräteeinheit befinden, in zwei Gruppen (113 und 114) von Zentralmoduln unterteilt sind, die unabhängig voneinander arbeiten, und daß jedes von jeder Teilnehmer- und Verbindungs-Endgeräteeinheit ausgehende Bündel (F1 bis F6) aus Verbindungsleitungen MIC gebildet ist, wovon ein Teil mit einem oder mehreren Zentralmoduln verbunden ist, die zu einer Gruppe von Zentralmoduln (113) gehören, und der andere Teil mit einem oder mehreren Zentralmoduln verbunden ist, welche zu der anderen Gruppe von Zentralmoduln (114) gehören.

4. Modulförmiges Vermittlungsnetzwerk nach einem der Ansprüche 1 bis 3, dadurch gekennzeichnet, daß die Signalaustauschvorgänge zwischen zwei Teilnehmer- und Verbindungs-Endgeräteeinheiten auf einem Hinweg und einem Rückweg wenigstens einer MIC-Verbindungsleitung erfolgen, welche diese beiden Einheiten verbindet (Fig. 7).

5. Modulförmiges Vermittlungsnetzwerk nach Anspruch 4, dadurch gekennzeichnet, daß aus Sicherheitsgründen ein Hinweg und ein Rückweg für die Signalisierung auf zwei MIC-Verbindungsleitungen des Bündels reserviert sind, wobei eine der beiden MIC-Verbindungsleitungen mit einem Zentralmodul verbunden ist, der zu einer der beiden Gruppen von Zentralmoduln gehört, während die andere MIC-Verbindungsleitungen mit einem Zentralmodul verbunden ist, der zu der anderen Gruppe von Zentralmoduln gehört (Fig. 7).

6. Modulförmiges Vermittlungsnetzwerk nach Anspruch 5, dadurch gekennzeichnet, daß jede Teilnehmer- und Verbindungs-Endgeräteeinheit ferner zwei Signalisierungs-Kontrollvorrichtungen (11$_1$, 11$_2$) umfaßt, die jeweils einer anderen Gruppe von Zentralmoduln zugeordnet sind, wobei jede Signalisierungs-Kontrollvorrichtung es ermöglicht, die zwischen der betreffenden Teilnehmer- und Verbindungs-Endgeräteeinheit und den anderen Einheiten erfolgende Signalisierung zu überwachen, die über die verschiedenen Verbindungsleitungen MIC ausgeführt werden, welche mit den verschiedenen Zentralmoduln verbunden sind, die zu der Gruppe von Zentralmoduln gehören, welcher

6

**0 018 879**

die betreffende Signalisierungs-Kontrollvorrichtung zugeordnet ist.

## Claims

1. Modular switching network for a telephone exchange of the time type intended to interconnect subscriber and circuit terminal units, each subscriber and circuit terminal unit comprising at least one central module (1) which in turn comprises parts relating to the concentration (2) and deconcentration, and several terminal moduls (4 to 9), as well as a certain number of MIC (Se, Es) junctions, each MIC junction constituting an input and an output of a central module (1) contained in the subscriber and circuit terminal unit, characterized in that the subscriber and circuit terminal units are interconnected directly two to two by said MIC junctions.

2. Modular switching network according to claim 1, characterized in that all the MIC junctions interconnecting two predetermined subscriber and circuit terminal units are grouped in a bundle whose size depends on the traffic which is to run between the two subscriber and circuit terminal units.

3. Modular switching network according to any one of claims 1 or 2, characterized in that for security reasons the central modules (107 to 112) situated in the same subscriber and circuit terminal unit are divided into two groups (113 and 114) of central modules, functioning independently of each other, and that each bundle (F1 to F6) issuing from each subscriber and circuit terminal unit is constituted by MIC junctions of which one part is connected to one or more central modules belonging to a group of central modules (113) and the other part is connected to one or more central modules belonging to the other group of central modules (114).

4. Modular switching network according to any one of claims 1 to 3, characterized in that the signaling exchanges between two subscriber and circuit terminal units are effected on an outgoing path and a return path of at least one MIC junction connecting said two units (Fig. 7).

5. Modular switching network according to claim 4, characterized in that for reasons of security an outgoing path and a return path are reserved for the signaling on two MIC junctions of the bundle, one of the two MIC junctions being connected to a central module belonging to one of the two groups of central modules and the other junction being connected to a central module belonging to the other group of central modules (Fig. 7).

6. Modular switching network according to claim 5, characterized in that each subscriber and circuit terminal unit further comprises two signaling monitoring devices ($11_1$, $11_2$) each associated with a different group of central modules, each signaling monitoring device permitting monitoring of the signaling exchange between said subscriber and circuit terminal unit and the other units carried by the different MIC junctions connected to the different central modules belonging to the group of central modules which said signaling monitoring device is associated with.

7

0 018 879

Fig.1

9

Fig. 2 A

Fig. 2 B

| 2 | 3 | 4 | 5 | 6 | 7 |
|---|---|---|---|---|---|
| F1U1 ↔ F1U2 | F1U1 ↔ F1U2 | F1U1 ↔ F1U2 | F1U1 ↔ F1U2 | F1U1 ↔ F1U2 | F1U1 ↔ F1U2 |
| | F2U1 ↔ F1U3<br>F2U2 ↔ F2U3 | F2U1 ↔ F1U3<br>F2U2 ↔ F2U3 | F2U1 ↔ F1U3<br>F2U2 ↔ F2U3 | F2U1 ↔ F1U3<br>F2U2 ↔ F2U3 | F2U1 ↔ F1U3<br>F2U2 ↔ F2U3 |
| | | F3U1 ↔ F1U4<br>F3U2 ↔ F2U4<br>F3U3 ↔ F3U4 | F3U1 ↔ F1U4<br>F3U2 ↔ F2U4<br>F3U3 ↔ F3U4 | F3U1 ↔ F1U4<br>F3U2 ↔ F2U4<br>F3U3 ↔ F3U4 | F3U1 ↔ F1U4<br>F3U2 ↔ F2U4<br>F3U3 ↔ F3U4 |
| | | | F4U1 ↔ F1U5<br>F4U2 ↔ F2U5<br>F4U3 ↔ F3U5<br>F4U4 ↔ F4U5 | F4U1 ↔ F1U5<br>F4U2 ↔ F2U5<br>F4U3 ↔ F3U5<br>F4U4 ↔ F4U5 | F4U1 ↔ F1U5<br>F4U2 ↔ F2U5<br>F4U3 ↔ F3U5<br>F4U4 ↔ F4U5 |
| | | | | F5U1 ↔ F1U6<br>F5U2 ↔ F2U6<br>F5U3 ↔ F3U6<br>F5U4 ↔ F4U6<br>F5U5 ↔ F5U6 | F5U1 ↔ F1U6<br>F5U2 ↔ F2U6<br>F5U3 ↔ F3U6<br>F5U4 ↔ F4U6<br>F5U5 ↔ F5U6 |
| | | | | | F6U1 ↔ F1U7<br>F6U2 ↔ F2U7<br>F6U3 ↔ F3U7<br>F6U4 ↔ F4U7<br>F6U5 ↔ F5U7<br>F6U6 ↔ F6U7 |

# Fig.3

$\mathscr{F}1 = F1 + F2$

$\mathscr{F}2 = F3 + F4$

$\mathscr{F}3 = F5 + F6$

Fig.4

Fig.5

0 018 879

| 2 | 3 | 4 | 5 | 6 | 7 |
|---|---|---|---|---|---|
| F1U1 ↔ F1U2 | F1U1 ↔ F1U2 | F1U1 ↔ F1U2 | F1U1 ↔ F1U2 | F1U1 ↔ F1U2 | F1U1 ↔ F1U2 |
| | F2U1 ↔ F1U3 | F2U1 ↔ F1U3 | F2U1 ↔ F1U3 | F2U1 ↔ F1U3 | F2U1 ↔ F1U3 |
| | F2U2 ↔ F2U3 | F2U2 ↔ F2U3 | F2U2 ↔ F2U3 | F2U2 ↔ F2U3 | F2U2 ↔ F2U3 |
| | | F3U1 ↔ F1U4 | F3U1 ↔ F1U4 | F3U1 ↔ F1U4 | F3U1 ↔ F1U4 |
| | | F3U2 ↔ F2U4 | F3U2 ↔ F2U4 | F3U2 ↔ F2U4 | F3U2 ↔ F2U4 |
| | | F3U3 ↔ F3U4 | F3U3 ↔ F3U4 | F3U3 ↔ F3U4 | F3U3 ↔ F3U4 |
| | | | F4U1 ↔ F1U5 | F4U1 ↔ F1U5 | F4U1 ↔ F1U5 |
| | | | F4U2 ↔ F2U5 | F4U2 ↔ F2U5 | F4U2 ↔ F2U5 |
| | | | F4U3 ↔ F3U5 | F4U3 ↔ F3U5 | F4U3 ↔ F3U5 |
| | | | F4U4 ↔ F4U5 | F4U4 ↔ F4U5 | F4U4 ↔ F4U5 |
| | | | | F5U1 ↔ F1U6 | F5U1 ↔ F1U6 |
| | | | | F5U2 ↔ F2U6 | F5U2 ↔ F2U6 |
| | | | | F5U3 ↔ F3U6 | F5U3 ↔ F3U6 |
| | | | | F5U4 ↔ F4U6 | F5U4 ↔ F4U6 |
| | | | | F5U5 ↔ F5U6 | F5U5 ↔ F5U6 |
| | | | | | F6U1 ↔ F1U7 |
| | | | | | F6U2 ↔ F2U7 |
| | | | | | F6U3 ↔ F3U7 |
| | | | | | F6U4 ↔ F4U7 |
| | | | | | F6U5 ↔ F5U7 |
| | | | | | F6U6 ↔ F6U7 |

Fig. 6 A

19

| 8 | 9 | 10 |
|---|---|---|
| F7U1 ↔ F1U8 | F7U1 ↔ F1U8 | F7U1 ↔ F1U8 |
| F7U2 ↔ F2U8 | F7U2 ↔ F2U8 | F7U2 ↔ F2U8 |
| F7U3 ↔ F3U8 | F7U3 ↔ F3U8 | F7U3 ↔ F3U8 |
| F7U4 ↔ F4U8 | F7U4 ↔ F4U8 | F7U4 ↔ F4U8 |
| F7U5 ↔ F5U8 | F7U5 ↔ F5U8 | F7U5 ↔ F5U8 |
| F7U6 ↔ F6U8 | F7U6 ↔ F6U8 | F7U6 ↔ F6U8 |
| F7U7 ↔ F7U8 | F7U7 ↔ F7U8 | F7U7 ↔ F7U8 |
| F7U8 → F8U8 | F7U8 ↔ F8U8 | F7U8 ↔ F8U8 |
| | F8U1 ↔ F1U9 | F8U1 ↔ F1U9 |
| | F8U2 ↔ F2U9 | F8U2 ↔ F2U9 |
| | F8U3 ↔ F3U9 | F8U3 ↔ F3U9 |
| | F8U4 ↔ F4U9 | F8U4 ↔ F4U9 |
| | F8U5 ↔ F5U9 | F8U5 ↔ F5U9 |
| | F8U6 ↔ F6U9 | F8U6 ↔ F6U9 |
| | F8U7 ↔ F7U9 | F8U7 ↔ F7U9 |
| | F8U8 ↔ F8U9 | F8U8 ↔ F8U9 |
| | | F9U1 ↔ F1U10 |
| | | F9U2 ↔ F2U10 |
| | | F9U3 ↔ F3U10 |
| | | F9U4 ↔ F4U10 |
| | | F9U5 ↔ F5U10 |
| | | F9U6 ↔ F6U10 |
| | | F9U7 ↔ F7U10 |
| | | F9U8 ↔ F8U10 |
| | | F9U9 ↔ F9U10 |

# Fig. 6 B

Fig.7